# EUROPÄISCHE PATENTSCHRIFT

(11) **EP 4 463 656 B1**
(45) Veröffentlichungstag und Bekanntmachung des Hinweises auf die Patenterteilung: **28.01.2026**
(21) Anmeldenummer: 22839484.7
(22) Anmeldetag: 21.12.2022
(51) Int. Cl.: F23C 9/08, F23D 14/12, F23D 14/66

(54) **BRENNERVORRICHTUNG FÜR DIE INDIREKTE ERWÄRMUNG EINES OFENRAUMS**
BURNER DEVICE FOR INDIRECT HEATING OF A FURNACE CHAMBER
DISPOSITIF DE BRÛLEUR POUR LE CHAUFFAGE INDIRECT D'UNE CHAMBRE DE FOUR

(30) Priorität: 11.01.2022 DE 102022100480
(43) Veröffentlichungstag der Anmeldung: 20.11.2024
(73) Patentinhaber: IBS Industrie-Brenner-Systeme GmbH, 58091 Hagen (DE)
(72) Erfinder: KEIM, Ernst, 58675 Hemer (DE)
(74) Vertreter: Patentanwälte Buschhoff Hennicke Althaus
(86) Internationale Anmeldenummer: PCT/IB2022/062596
(87) Internationale Veröffentlichungsnummer: WO 2023/135474

(56) Entgegenhaltungen:
- EP-A1- 2 910 855
- EP-A2- 0 875 716
- US-A- 4 894 006

## Beschreibung

Die Erfindung betrifft eine Brennervorrichtung für flüssige oder insbesondere gasförmige Brennstoffe für die indirekte Erwärmung eines Ofenraums, mit einer Brennkammer mit einer Brennkammermündung und mit einem die Brennkammer zumindest im Bereich der Brennkammermündung umgebenden Strahlrohr und einem in dessen Inneren angeordneten, vorzugsweise koaxial zur Brennkammermündung verlaufenden Innenrohr mit einem zur Brennkammermündung weisenden Innenrohreinlass und einem zu einem geschlossenen Ende des Strahlrohrs gerichteten Innenrohrauslass, wobei die Außenumfangsfläche des Innenrohrs mit der Innenumfangsfläche des Strahlrohrs einen Ringspalt zur Rückführung des durch das Innenrohr von dessen Einlass zum Innenrohrauslass strömenden Gasgemisches bildet und wobei zwischen dem Innenrohreinlass und der Brennkammermündung ein Rezirkulationsdurchlass ausgebildet ist.

Beim Einsatz von Industriebrennern zur Aufheizung von Ofenräumen ist es bekannt, zur Reduzierung der Emissionen, insbesondere der Stickoxidemissionen, zum einen die Verbrennungsluft gestuft in mehreren Schritten zuzuführen und zum anderen einen vergleichsweise großen Anteil von Abgas zu rezirkulieren, das zusammen mit der über den Brennerkopf einströmenden Sekundärluft der aus der Brennkammer austretenden Primärflamme beigemischt wird. Hierdurch kommt es zu einer sogenannten "mild combustion" oder auch flammenlosen Oxidation, bei der die Reaktion des Gas-Luftgemisches ohne sichtbare Flamme erfolgt. Im Vergleich zu einer stabilen Verbrennung des Brennstoffes mit Flammenbildung zeichnet sich die flammenlose Oxidation durch sehr niedrige Stickoxidemissionen aus. Das Erzielen von den hohen Rezirkulationsraten und damit die Sicherstellung der flammenlosen Oxidation ist bei der direkten Befeuerung von Öfen ein mittlerweile sehr häufig angewendetes Verfahren.

In vielen industriellen Wärmebehandlungsprozessen soll allerdings verhindert werden, dass das für die Wärmebehandlung in den Ofen eingeführte Gut mit den Abgasen aus dem Verbrennungsprozess in Kontakt kommt. Bei derartigen Behandlungsverfahren werden die Brenner in Strahlrohren betrieben, die ihre Energie in Form von Festkörperstrahlung an den Ofeninnenraum abgeben. Die Verbrennung erfolgt also im Inneren des Strahlrohrs der Brennervorrichtung, wobei das Strahlrohr die in seinem Inneren entstehende Wärme an seine Außenfläche leitet. Das Strahlrohr ragt in den Ofenraum hinein und gibt die Wärme dort als Strahlungswärme ab. In dem Inneren des Strahlrohrs ist im Allgemeinen konzentrisch zu diesem ein Innenrohr angeordnet, das einlassseitig an die Mündung oder den Auslass einer Brennkammer anschließt. Durch das Innenrohr wird das aus der Brennkammer austretende Gas-Luftgemisch zum vorderen, verschlossenen Ende des Strahlrohrs geleitet, wo es aus dem Innenrohr wieder austritt und dann durch den radial weiter außenliegenden Ringspalt zwischen der Außenseite des Innenrohrs und der Innenseite des Strahlrohrs wieder zurück in Richtung auf den Brennerkopf strömt. Die bei der Reaktion entstandene Wärme gibt das heiße Gasgemisch an die Strahlrohrwand ab. Ein Teil des durch den Ringspalt zurückströmenden Abgases aus dem Verbrennungsprozess soll zur Reduzierung der Emissionen rezirkuliert werden, was sich bei den bekannten Systemen aufgrund der Randbedingungen im Inneren des Strahlrohrs und des Innenrohrs als schwierig erweist.

Die EP 0 875 716 A2 offenbart ein Verfahren und eine Vorrichtung zur mehrstufigen Verbrennung von Brennstoff, wobei die Verbrennung in einem geschlossenen Raum, vorzugsweise in einem Strahlheizrohr stattfindet. Die EP 0 875 716 A2 offenbart eine Brennervorrichtung mit den Merkmalen des Oberbegriffs des Anspruchs 1.

Die EP 2 910 855 A1 offenbart einen Rekuperatorbrenner mit Zusatzwärmetauscher, der den Rekuperator umschließt. Aus der US 4 894 006 ist ein Brennersystem bekannt, bei dem der Auslass der Abgase mit hoher Geschwindigkeit erfolgt.

Aufgabe der Erfindung ist es, eine Brennervorrichtung der eingangs genannten Art so weiterzuentwickeln, dass auch bei den vergleichsweise kleinen Abmessungen des Strahlrohrs (im Verhältnis zu einem Ofenraum bei direkter Beheizung) im Inneren der Vorrichtung zuverlässig eine flammenlose Oxidation durch ein geeignet hohes Maß an Rezirkulation von Abgasen sichergestellt werden kann, so dass die Emissionswerte einer derartigen Strahlrohr-Brennervorrichtung vergleichbar gut sind wie die, die bei der direkten Beheizung eines Ofenraums möglich sind, wenn dort die flammenlose Oxidation zum Einsatz kommt.

Diese Aufgabe wird mit der Erfindung durch einen die Brennkammer umgebenden Rekuperator zur Vorwärmung von Verbrennungsluft mittels aus der Brennervorrichtung ausgeleitetem Abgas gelöst, wobei der Rekuperator einen abgaseinlassseitig zu dem Ringspalt weisenden Zentrierstutzen aufweist, der den Einlass für das Innenrohr bildet oder mit diesem zusammenwirkt und an dem der Rezirkulationsdurchlass ausgebildet ist, wobei das Verhältnis des Strömungsquerschnittes des Innenrohrs zum Strömungsquerschnitt des Ringspalts so gewählt ist, dass der statische Druckanteil des durch das Innenrohr und den Ringspalt strömenden Gasgemisches im Bereich des Innenrohreinlasses kleiner ist als in dem Ringspalt in dem Bereich vor dem Rezirkulationsdurchlass.

Diese Ausgestaltung hat zur Folge, dass ein Druckgefälle des statischen Druckes am Rezirkulationsdurchlass zwischen dessen außen zum Ringspalt weisenden Einlass und innen zum Innenrohr hin offenen Auslass vorhanden ist. Dieses Druckgefälle bewirkt, dass ein entsprechend hoher Teil des durch den Ringspalt zurück zum Brennerkopf strömenden Abgases durch den Rezirkulationsdurchlass angesaugt wird und zusammen mit dem aus der Brennkammermündung ausströmenden Gas-Luftgemisches erneut durch das Innenrohr strömt. Dadurch wird bewirkt, dass die Reaktion zwischen Gas und Brennstoff auf dem Weg durch das Innenrohr und zurück durch den Ringspalt ohne Ausbildung einer sichtbaren Flamme erfolgt. Die Bildung von Stickoxiden wird hierdurch zuverlässig auf ein Minimum beschränkt. In der Praxis wird der (statische) Druckunterschied und damit die hohe Rezirkulationsrate von Abgas durch den Rezirkulationsdurchlass durch eine spezielle Gestaltung des Systems Brenner und Strahlrohr bewirkt. Insbesondere wird der Druckunterschied erreicht durch eine Verringerung des Strömungsquerschnittes des Innenrohrs im Verhältnis zum Strömungsquerschnitt im Ringspalt, so dass die Strömungsgeschwindigkeit des durch das Innenrohr strömenden Gasgemisches größer als im Ringspalt ist. Entsprechend höher ist der dynamische Druckanteil im Innenrohr als im Ringspalt, so dass sich das von den statischen Druckanteilen bestimmte Druckgefälle in der gewünschten Höhe einstellt, womit das Rückströmen von Abgasen durch den Rezirkulationsdurchlass begünstigt wird.

Das Strömungsverhalten in einer Brennervorrichtung der hier vorgestellten Art stellt sich grundsätzlich so dar, dass die aus dem Brenner aus dessen Mündung austretende Flamme, oder im flammenlosen Betrieb das aus dem Brenner austretende reaktive Gemisch, in das im Strahlrohrinneren befindliche Innenrohr eintritt und dieses bis zu seinem Ende durchströmt. Am Ende des Innenrohrs tritt das Gasgemisch dann aus dem Auslass des Innenrohrs aus und wird in den Ringspalt zwischen Innenrohr und Strahlrohr umgelenkt. Das Gasgemisch strömt dann durch den Ringspalt zurück in Richtung Brenner, wo ein Teil der Abgase der Flamme bzw. dem aus der Brennermündung austretenden reaktiven Gemisch wieder zugeführt und dadurch im Kreis geführt werden soll. Der Anteil des Abgases, der dem für den Verbrennungsprozess zugeführten Gasgemisch zugemischt wird, beschreibt das sogenannte Rezirkulationsverhältnis. Dieses wird in der Regel als das Verhältnis des rezirkulierten Massenstroms zu dem Gesamtmassenstrom (Summe aus Abgas und rezirkuliertem Abgas) ausgedrückt.

Während in der Vergangenheit das Innenrohr einer gattungsgemäßen Brennervorrichtung offenbar nur unter dem Aspekt der Führung der Abgase und des damit zu erzielenden, möglichst kleinen Temperaturgradienten über die Länge des Rohres betrachtet wurde, wurde mit der Erfindung erkannt, dass die erzielbare Rezirkulationsrate entscheidend von den Geschwindigkeits- und Druckfeldern im Strahlrohr bestimmt wird und diese wiederum maßgeblich durch das Innenrohr beeinflusst werden. Bei den bisher bekannten Brennersystemen ist der Strömungsquerschnitt des Innenrohrs größer als der Strömungsquerschnitt im Ringspalt. Dies führt dazu, dass im stationären Zustand des Systems, d.h. bei einer konstanten Rezirkulationsrate, die mittlere Strömungsgeschwindigkeit im Ringspalt größer als die mittlere Strömungsgeschwindigkeit im Innenrohr ist. Bei den bekannten Systemen beträgt der Faktor zwischen den beiden Geschwindigkeiten ca. 1,3, d.h. die mittlere Geschwindigkeit im Ringspalt liegt ca. 30 % über der mittleren Geschwindigkeit im Innenrohr. Ermittelt man auf der Grundlage dieser Geschwindigkeitsverhältnisse die Verhältnisse für den dynamischen Druck, um die Differenz des statischen Druckes zwischen Ringspalt und Innenrohr abzuschätzen, stellt man - auch bei Berücksichtigung der Druckverluste in dem System - fest, dass bei den bekannten Systemen mit Innenrohren mit vergleichsweise großem Durchmesser - abgesehen von lokalen Bereichen in der Nähe der Brennermündung - die mittlere statische Druckdifferenz zwischen Ringspalt und Innenrohr negativ ist, d.h. in die falsche Richtung weist. Eine nennenswerte Rezirkulationsrate ist damit nicht oder nur durch Ausnutzung von sehr hohen Geschwindigkeiten im Bereich des Brenneraustrittes erreichbar. Durch die Verwendung von Innenrohren mit kleineren Durchmessern kehrt sich der Wert der statischen Druckdifferenz rechnerisch um, d.h. die Differenz des statischen Druckes zwischen Ringspalt und Innenrohr wird positiv, womit eine deutlich höhere Rezirkulationsrate von Abgas aus dem Ringspalt zurück in das Innenrohr und damit die Sicherstellung eines flammenlosen Betriebs möglich wird.

Es ist bei der Erfindung von besonderem Vorteil, wenn der Strömungsquerschnitt des Innenrohrs über dessen Länge zwischen dem Innenrohreinlass und dem Innenrohrauslass zumindest im Wesentlichen konstant ist. Insbesondere kann die Anordnung mit Vorteil so getroffen sein, dass das Verhältnis des Strömungsquerschnitts des Innenrohrs zum Strömungsquerschnitt des Ringspalts zumindest im Wesentlichen konstant ist. Das erfindungsgemäß angestrebte Druckgefälle des statischen Druckes am Rezirkulationsdurchlass wird also gemäß dieser besonders bevorzugten Ausgestaltung ohne besondere Querschnittsveränderungen im Verlauf des Innenrohrs erreicht, also insbesondere ohne den Einbau von Blenden oder von düsenartigen Einschnürungen im Inneren des Innenrohrs wie beispielsweise einer Lavaldüse o.dgl.. Vielmehr wird das angestrebte Druckgefälle, aufgrund dessen die hohe Rezirkulationsrate möglich wird, im Wesentlichen allein durch die geeignete Wahl der Strömungsquerschnitte im Innenrohr und im Ringraum erreicht, so dass Druckverluste, wie sie mit der Anordnung von zusätzlichen strömungstechnischen Einbauten sonst regelmäßig verbunden sind, auf ein Mindestmaß beschränkt bleiben. "Im Wesentlichen konstant" soll in diesem Zusammenhang bedeuten, dass der Strömungsquerschnitt des Innenrohrs nicht über dessen gesamte Länge immer exakt derselbe sein muss, sondern dass es im Rahmen der Erfindung möglich ist, über den Verlauf des Innenrohrs kleinere Querschnittsänderungen zuzulassen. Derartige kleinere Querschnittsänderungen können beispielsweise an Muffenverbindungen eines aus mehreren mit verbundenen Rohrabschnitten bestehenden Innenrohrs oder im Bereich von Stützfüßen auftreten, die am Innenrohr fest angeformt sind, um dieses an der Innenumfangsfläche des Strahlrohrs abzustützen.

Vorzugsweise haben das Strahlrohr und das Innenrohr jeweils kreisringförmige Querschnitte und sind konzentrisch zueinander angeordnet. Das Verhältnis des Strömungsquerschnittes des Innenrohrs zum Strömungsquerschnitt des Ringspalts liegt vorzugsweise im Bereich von 0,4 bis 0,8, und zwar vorzugsweise über die ganze Länge des Innenrohrs zwischen dessen Einlass bis hin zum Innenrohrauslass, an dem es zur Umlenkung des Gasstroms in den Ringspalt kommt. Bei der bevorzugten, konzentrischen Anordnung von Innenrohr und Strahlrohr mit kreisförmigem Querschnitt kann das Verhältnis des Innendurchmessers des Innenrohrs zum Innendurchmesser des dieses konzentrisch umgebenden Strahlrohrs bevorzugt im Bereich von 0,55 bis 0,65 (± 0,1) liegen.

In weiterer, vorteilhafter Ausgestaltung der Erfindung kann die Brennkammermündung an einer Brennerspitze angeordnet sein, die ein Stück weit vor dem Rezirkulationsdurchlass in das Innenrohr hineinragt. Hierdurch wird sichergestellt, dass das aus der Brennkammermündung austretende Gas-Luftgemisch bzw. die aus der primären Reaktion entstehende Flamme vollständig in das Innenrohr eintritt und nicht durch den Rezirkulationsdurchlass zurückschlagen kann.

In bevorzugter, weiterer Ausgestaltung der Erfindung hat die Brennervorrichtung mindestens eine Sekundärluftzufuhreinrichtung mit mindestens einem Sekundärluftauslass. Der mindestens eine Sekundärluftauslass mündet dabei vorzugsweise in Strömungsrichtung im Bereich vor der Brennkammermündung in den Rezirkulationsdurchlass. Gemäß dieser Ausgestaltung gelangt also nur ein Teil der gesamten, dem Verbrennungsprozess zugeführten Verbrennungsluft in die Brennkammer (Primärluft), wo sie mit dem Brennstoff im unterstöchiometrischen Verhältnis (λ < 1,0) vermischt wird. Aufgrund des unterstöchiometrischen Mischungsverhältnisses, bei dem die Menge des zugeführten Sauerstoffes für eine vollständige Reaktion nicht ausreicht, wird in dieser ersten Verbrennungsstufe die Bildung von Stickoxiden unterdrückt.

Die unterstöchiometrisch brennende Flamme tritt mit relativ hoher Geschwindigkeit an der Brennkammermündung aus der Brennkammer aus und mischt sich mit der über die Sekundärluftzufuhreinrichtung zugeführten Sekundärluft und dem rezirkulierten Abgas. Während das rezirkulierte Abgas an der weiteren Reaktion, die im Innenrohr und teilweise auch noch bei der Rückführung des Gasgemisches durch den äußeren Ringspalt stattfindet, nicht beteiligt ist, bewirkt es eine Vergleichmäßigung des Verbrennungsprozesses und verhindert lokal auftretende Temperaturspitzen bei der weiteren Oxidation unter Verbrauch der zugeführten Sekundärluft, so dass der Brennstoff vollständig bei niedrigen Emissionen umgesetzt wird.

Der mindestens eine Sekundärluftauslass kann als eine die Brennkammer umschließende Ringspaltöffnung ausgestaltet sein oder als mehrere über den Umfang der Brennkammer verteilt angeordnete, vorzugsweise nicht miteinander verbundene Luftrohröffnungen. Wenn mehrere Luftrohröffnungen unabhängig voneinander für die Zuleitung von Sekundärluft vorgesehen werden, kann nicht nur die Menge der zugeführten Sekundärluft, sondern auch deren Stelle am Umfang der Brennkammer gezielt verändert und damit der Verbrennungsprozess beeinflusst werden.

Erfindungsgemäß weist die Vorrichtung einen die Brennkammer umgebenden Rekuperator zur Vorwärmung von Verbrennungsluft mittels aus der Brennervorrichtung ausgeleitetem Abgas auf, wobei die Anordnung vorzugsweise so getroffen ist, dass der Rekuperator eine abgaseinlassseitig zu dem Ringspalt weisende Rekuperatorspitze hat, die sich in einem Abstand von dem Innenrohreinlass befindet und den Rezirkulationsdurchlass begrenzt. Der mindestens eine Sekundärluftauslass kann dann an der Rekuperatorspitze in den Rezirkulationsdurchlass münden. Mit Hilfe des Rekuperators wird in bekannter Weise die Verbrennungsluft für den Verbrennungsprozess vorgewärmt, indem das aus der Brennervorrichtung ausgeleitete Abgas zumindest einen Teil seiner Restwärme über Wärmeaustauschflächen des Rekuperators an die Verbrennungsluft abgibt.

Die Brennkammermündung hat vorzugsweise einen Austrittsquerschnitt für das aus der Brennkammer austretenden Gasgemisch, der eine auf die Brennerleistung bezogene Querschnittsfläche von 2 - 10 mm²/KW, vorzugsweise von 3 - 8 mm²/KW aufweist. Die Brennkammermündung bildet zweckmäßig eine scharfkantige Düsenöffnung bzw. eine "Stolperkante" von beispielsweise ca. 4-10mm Höhe für den Auslass des Gasgemisches aus der Brennkammer. Aufgrund der scharfkantigen Düsenöffnung oder der Stolperkante und der damit verbundenen, sprungartigen Querschnittsänderung beim Auslass des Gasgemisches aus dem Brenner wird eine höhere Rezirkulationsrate und eine bessere Vermischung der Primärflamme mit der Sekundärluft und/oder dem rezirkulierten Abgas erreicht als mit einer Düse mit sich kontinuierlich änderndem Querschnitt. Es darf angenommen werden, dass dieser Effekt auf die Ausbildung von Ablösungen und Wirbeln im Gasstrom zurückzuführen ist.

Empirische Untersuchungen haben ebenfalls ergeben, dass das Verhältnis des Austrittsquerschnittes der Brennkammermündung zum Querschnitt des mindestens einen Sekundärluftauslasses - jeweils bezogen auf die Leistung - vorzugsweise im Bereich von 1,5 bis 3,0 liegt, um ein möglichst gutes Ergebnis einer flammenlosen Verbrennung im Innen- und Strahlrohr zu erreichen.

Weitere Merkmale und Vorteile der Erfindung ergeben sich aus der nachfolgenden Beschreibung und der Zeichnung, worin eine bevorzugte Ausführungsform der Erfindung anhand eines Beispiels dargestellt und beschrieben wird. Es zeigt:

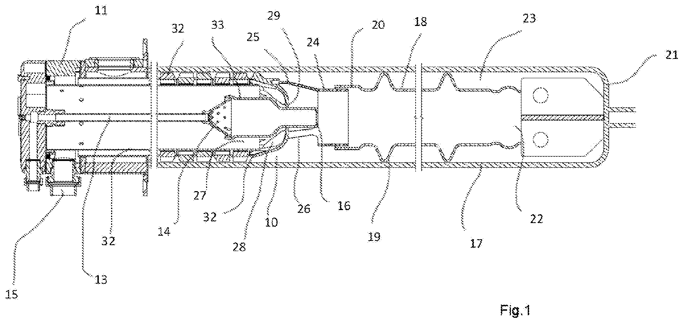

- Fig. 1: eine Brennervorrichtung nach der Erfindung im Längsschnitt; und

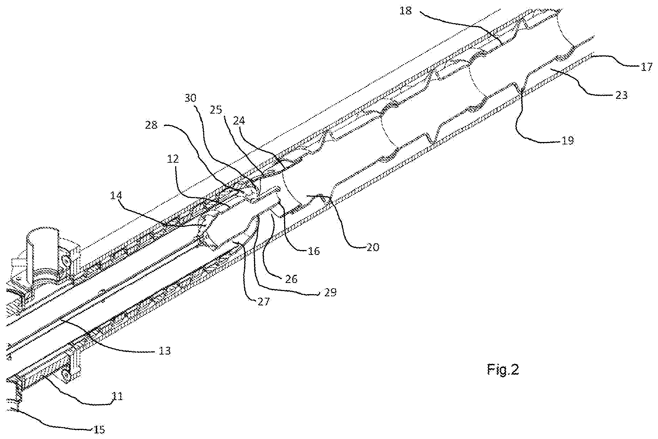

- Fig. 2: den Gegenstand der Fig. 1 in einer perspektivischen Darstellung, teilweise im Schnitt.

Die Zeichnung zeigt eine insgesamt mit 10 bezeichnete Brennervorrichtung, die für die indirekte Beheizung eines (nicht dargestellten) Ofenraums geeignet ist.

Die Brennervorrichtung umfasst einen Rekuperatorbrenner 11 mit einer Brennkammer 12, die einlassseitig an eine Brenngas-Zuleitung 13 angeschlossen ist, sowie über Lufteinlässe 14 verfügt, über die ein Teil von Verbrennungsluft, die dem Brenner 11 über einen Luftanschluss 15 zugeführt wird, in die Brennkammer 12 gelangt (Primärluft), um sich dort mit dem Brenngas zu vermischen.

Die Brennkammer 12 hat auslassseitig eine Brennkammermündung 16, aus der das mit der Primärluft vermischte Brenngas austritt und dabei in bekannter Weise, bspw. mittels einer Zündlanze gezündet wird. Mindestens das vordere Ende des Brenners 11 mit der dort angeordneten Brennkammer 12 ist von einem Strahlrohr 17 umgeben, in dessen Inneren ein koaxial zur Brennkammermündung 16 verlaufendes Innenrohr 18 angeordnet ist. Das Innenrohr 18 stützt sich mit einer Reihe von Stützfüßen 19 an der Innenumfangsfläche des Strahlrohrs 17 ab. Das Innenrohr 18 hat einen zur Brennkammermündung 16 weisenden Innenrohreinlass 20 und einen zu einem geschlossenen Ende 21 des Strahlrohres 17 gerichteten Innenrohrauslass 22. Zwischen der Außenumfangsfläche des Innenrohrs 18 und der Innenumfangsfläche des Strahlrohrs 17 ist ein Ringspalt 23 ausgebildet, dessen Querschnitt von den Stützfüßen 19 nur sehr geringfügig und punktuell eingeengt wird. Das Innenrohr besteht bei dem gezeigten Ausführungsbeispiel aus mehreren einzelnen Rohrabschnitten, die mittels Muffenverbindungen verbunden sind. Der innere Querschnitt des Innenrohrs (Strömungsquerschnitt), durch den das durch die Brennervorrichtung strömende Gasgemisch hindurchgeht, ist über dessen Länge im Wesentlichen konstant, geringfügige Variationen des Durchmessers des Innenrohrs beispielsweise im Bereich der Muffenverbindungen und der Stützfüße beeinflussen den wirksamen Strömungsquerschnitt also nicht in einem nennenswerten Maß. Insbesondere sind im Inneren des Innenrohrs keine relevanten Querschnittsverengungen wie beispielsweise Blenden, Düsen o.dgl., die maßgeblich zum Druckverlust des hindurchströmenden Gasgemisches beitragen könnten.

Bei dem gezeigten Ausführungsbeispiel ist der Innenrohreinlass 20 mit einem zugehörigen Zentrierstutzen 24 ausgestattet, der mit drei gleichmäßig über den Umfang verteilt angeordneten Stützfüßen 25 am vorderen Ende des Brenners 11 festgelegt ist. Dieser Zentrierstutzen 24 sorgt für eine dauerhaft koaxiale Ausrichtung des Innenrohreinlasses relativ zu der dazu ausgerichteten Brennkammermündung 16. Die zwischen den drei Stützfüßen 25 ausgesparten Bereiche des Zentrierstutzens bilden einen Rezirkulationsdurchlass 26 für einen Teil des aus dem Verbrennungsprozess resultierenden Abgases, wie dies nachstehend noch im Detail beschrieben wird.

Wendet man sich nunmehr wieder dem Bereich der Brennkammer 12 zu, so erkennt man, dass um diese herum eine Sekundärluftzufuhreinrichtung 27 vorgesehen ist, mit der dem Gemisch aus Brenngas und Primärluft zusätzliche Luft (Sekundärluft) für die vollständige Verbrennung des Brenngases zugeleitet wird. Während die Primärluft vom Luftanschluss durch das Gehäuseinnere des Rekuperatorbrenners am hinteren Ende der Brennkammer 12 durch die dort vorgesehenen Primärlufteinlässe 14 in die Brennkammer 12 gelangt und sich dort mit dem Brenngas vermischt, strömt die Sekundärluft außen an der Brennkammer 12 vorbei und gelangt über mehrere, über den Umfang verteilt angeordnete Luftkanäle 28 zu Sekundärluftauslässen 29, die am vorderen Ende des Brenners 11 an dessen Brennerspitze 30 angeordnet sind. Die Sekundärluft strömt zunächst außen an der Brennkammer 12 entlang und mischt sich am Einlass 20 zum Innenrohr 18 mit dem dort aus der Brennkammermündung 16 austretenden Gemisch aus Brenngas und Primärluft.

Das bei seinem Austritt aus der Brennkammermündung 16 gezündete, reaktive Gasgemisch gelangt zusammen mit der zugemischten Sekundärluft durch den Innenrohreinlass 20 in das Innenrohr 18 und durchströmt dieses bis zum Innenrohrauslass 22. Dort tritt es aus dem Innenrohr 18 aus und wird am geschlossenen Ende 21 des Strahlrohrs 17 in den äußeren Ringspalt 23 umgelenkt, um durch diesen in Richtung auf den am einlassseitigen Ende der Vorrichtung 10 angeordneten Rekuperatorbrenner 11 zurückgeführt zu werden.

Um eine möglichst gute und konstante Rezirkulationsrate des aus der Verbrennung von Brenngas und Luft resultierenden Abgases zurück in das Innenrohr 18 zu erzielen, um in diesem und dem sich anschließenden Ringspalt eine stabile, flammenlose Oxidation des Brennstoffs mit daraus resultierender Reduzierung unerwünschter Verbrennungsprodukte (NOx) zu erreichen, werden mit der Erfindung besondere strömungsmechanische Verhältnisse umgesetzt. Hierzu ist vorgesehen, dass das Verhältnis des Strömungsquerschnittes A_{I} des Innenrohrs 18 zum Strömungsquerschnitt A_{R} des Ringspaltes 23 so gewählt ist, dass der statische Druckanteil des durch das Innenrohr und den Ringspalt strömenden Gasgemisches im Bereits des Innenrohreinlasses 20 kleiner ist als in dem Ringspalt 23 in dem Bereich vor dem Rezirkulationsdurchlass 26.

Ein geringerer Strömungsquerschnitt führt bei gleichbleibendem Volumenstrom eines dadurch strömenden Gasgemisches dazu, dass die Strömungsgeschwindigkeit des Gasgemisches und damit auch der dynamische Druckanteil der Gasströmung größer werden. Entsprechend verringert sich der statische Druckanteil. Wenn man nun dafür sorgt, dass der statische Druckanteil außen am bzw. kurz vor dem Rezirkulationsdurchlass 26, d.h. im Bereich des äußeren Ringspalts, durch den das Verbrennungsgas von der Strahlrohrspitze zurück zum Brenner strömt, größer ist als innen im Bereich des Innenrohreinlasses, erhält man ein positives (statisches) Druckgefälle zwischen dem vor dem Rezirkulationsdurchlass 26 außen strömenden Abgas und dem innen in den Einlass 20 des Innenrohrs 18 eintretenden Brenngas/Luftgemisch, mit der Folge, dass ein nennenswerter Teil des Abgases mit in das Innenrohr gesaugt und somit rezirkuliert wird. Hierdurch ist im Strahlrohr eine stabile flammenlose Oxidation möglich, bei der die Bildung von Stickoxiden weitestgehend unterbleibt.

Das erwünschte (statische) Druckgefälle erreicht man durch die relative Erhöhung der Strömungsgeschwindigkeit im Innenrohr gegenüber der im äußeren Ringspalt an dem Rezirkulationsdurchlass herrschenden Strömungsgeschwindigkeit. Hierfür hat sich in Versuchen gezeigt, dass man den angestrebten Effekt besonders gut erreichen kann, wen das Verhältnis des Strömungsquerschnittes des Innenrohrs (AI) zum Strömungsquerschnitt des Ringspaltes (AR) im Bereich von AI/AR = 0,4 bis 0,8 liegt. Wenn wie bei dem gezeigten und beschriebenen Ausführungsbeispiel für das Innenrohr und das dieses umgebende Strahlrohr Rohre mit kreisförmigem Querschnitt zum Einsatz kommen, liegt das Verhältnis des Innendurchmessers (D_{I}) des Innenrohrs zum Innendurchmesser (D_{S}) des dieses konzentrisch umgebenden Strahlrohrs bevorzugt im Bereich von D_{I}/D_{S} = 0,55 bis 0,65 ± 0,1. Strömungsquerschnitt eines Innenrohrs mit kreisförmigem Querschnitt ist dessen Querschnittsfläche, also A_{I} = π D_{I}²/4. Der Strömungsquerschnitt im dazu konzentrischen Ringspalt beträgt entsprechend A_{R} = π (D_{S}²-D_{A}²)/4. Dabei bedeuten D_{I} Innendurchmesser des Innenrohrs, D_{A} Außendurchmesser des Innenrohrs und D_{S} Innendurchmesser des umgebenden Strahlrohrs.

Wie man in der Zeichnung erkennen kann, bildet die Brennkammermündung 16 am vorderen Ende der Brennkammer 12 eine scharfkantige Düsenöffnung 31. Diese sorgt beim Auslass des Gasgemisches aus der Brennkammer 12 für eine gute Verwirbelung und damit Vermischung sowohl der Primärluft mit dem Brenngas als auch der außen an der Brennkammer entlang strömenden Sekundärluft mit dem unterstöchiometrischen, aus der Brennkammer austretenden Gas-Luftgemisch. Als Austrittsquerschnitt für das aus der Brennkammer austretende Gasgemisch hat sich eine auf die Brennerleistung bezogene Querschnittsfläche von 2 bis 10 mm2/kW, vorzugsweise von 3 - 8 mm2/kW als besonders vorteilhaft erwiesen.

Der Brenner ist in an sich bekannter Weise mit einem Rekuperator 32 ausgestattet, der außen am Brennergehäuse, die Brennkammer 12 umgebend ausgebildet ist. Mit dem Rekuperator 32 wird die im Inneren des Brennergehäuses strömende Verbrennungsluft vorgewärmt durch Wärmetausch mit dem an Kühllamellen 33 des Rekuperators vorbeigeleiteten Anteil des Abgases, der nicht rezirkuliert wird. Am vorderen, also abgaseinlassseitigen Ende des Rekuperators 32 ist der den Rezirkulationsdurchlass 26 aufweisende Zentrierstutzen 24 am Brenner angeordnet, dessen vorderes Ende wiederum in das Innenrohr 18 eingeschoben ist, um dieses an seinem Einlass 20 zu zentrieren, aber dabei auch Längenänderungen des Innenrohres infolge von Wärmedehnung zu ermöglichen.

Die Erfindung ermöglicht durch das Zusammenspiel diverser Veränderungen in der Geometrie der Brennervorrichtung, insbesondere durch die Veränderung der Strömungsverhältnisse im Strahlrohr und dessen Innenrohr selbst eine stabile flammenlose Oxidation und damit eine drastische Reduzierung der Emissionen. Als besonders vorteilhaft sind dabei hervorzuheben die Anpassung von der Geometrie (Fläche und spezifische Ausgestaltung) der Austrittsöffnung der Brennkammer (1. Verbrennungsstufe) und deren Lage relativ zu der eigentlichen Brennermündung (Rekuperatorspitze), die Anpassung der Austrittsöffnung für die Sekundärluft in Abhängigkeit von der Austrittsfläche der Brennkammer, die Lage des Innenrohres im Strahlrohr relativ zu der Mündung der Brennkammer, bzw. der Rekuperatorspitze, und insbesondere die Anpassung vom Durchmesser des Innenrohres im Strahlrohr relativ zu dem Innendurchmesser des Strahlrohres selbst. Im flammenlosen Betrieb ist die Zuführung des Brennstoffes über die übliche Gasdüse in der Brennkammer möglich. Es kann aber auch eine nur für den flammenlosen Betrieb vorgesehene separate zentrale Gaslanze verwendet werden, die durch die Brennkammer in der Regel zentrisch durch diese hindurchgeführt ist und bis zu deren Austritt reicht. Die Gaslanze kann aber auch seitlich an der Innen- oder der Außenwand der Brennkammer entlanggeführt sein. Im flammenlosen Betrieb kann dann die Zuführung des Brenngases über diese Lanze erfolgen.

## Patentansprüche

1. Brennervorrichtung für flüssige oder gasförmige Brennstoffe für die indirekte Erwärmung eines Ofenraumes, mit einer Brennkammer (12) mit einer Brennkammermündung (16), mit einem die Brennkammer (12) zumindest im Bereich der Brennkammermündung (16) umgebenden Strahlrohr (17) und einem in dessen Inneren angeordneten, vorzugsweise koaxial zur Brennkammermündung (16) verlaufenden Innenrohr (18), das einen zur Brennkammermündung (16) weisenden Innenrohreinlass (20) und einen zu einem geschlossenen Ende (21) des Strahlrohres (17) gerichteten Innenrohrauslass (22) aufweist, wobei die Außenumfangsfläche des Innenrohrs (18) mit der Innenumfangsfläche des Strahlrohrs (17) einen Ringspalt (23) zur Rückführung des durch das Innenrohr (18) von dessen Einlass (20) zum Innenrohrauslass (22) strömenden Gasgemisches bildet, und wobei zwischen dem Innenrohreinlass (20) und der Brennkammermündung (16) ein Rezirkulationsdurchlass (26) ausgebildet ist, und mit einem die Brennkammer (12) umgebenden Rekuperator (32) zur Vorwärmung von Verbrennungsluft mittels aus der Brennervorrichtung ausgeleitetem Abgas, wobei das Verhältnis des Strömungsquerschnittes (Ar ) des Innenrohrs (18) zum Strömungsquerschnitt (AR ) des Ringspaltes (23) so gewählt ist, dass der statische Druckanteil des durch das Innenrohr (18) und den Ringspalt (23) strömenden Gasgemisches im Bereich des Innenrohreinlasses (20) kleiner ist als in dem Ringspalt (23) in dem Bereich vor dem Rezirkulationsdurchlass (26), und **dadurch gekennzeichnet, dass** der Rekuperator einen abgaseinlassseitig zu dem Ringspalt (23) weisenden Zentrierstutzen (24) aufweist, der den Einlass (20) für das Innenrohr (18) bildet oder mit diesem zusammenwirkt und an dem der Rezirkulationsdurchlass (26) ausgebildet ist.

2. Vorrichtung nach Anspruch 1, **dadurch gekennzeichnet, dass** der Strömungsquerschnitt (A_{I}) des Innenrohrs (18) über dessen Länge zwischen dem Innenrohreinlass (20) und dem Innenrohrauslass (22) zumindest im Wesentlichen konstant ist.

3. Vorrichtung nach Anspruch 1 oder 2, **dadurch gekennzeichnet, dass** das Verhältnis des Strömungsquerschnitts (A_{I}) des Innenrohrs (18) zum Strömungsquerschnitt (A_{R}) des Ringspalts (23) zumindest im Wesentlichen konstant ist.

4. Vorrichtung nach einem der Ansprüche 1 bis 3, **dadurch gekennzeichnet, dass** das Strahlrohr (17) und das Innenrohr (18) jeweils im Wesentlichen kreisringförmige Querschnitte haben und konzentrisch zueinander angeordnet sind.

5. Vorrichtung nach einem der Ansprüche 1 bis 4, **dadurch gekennzeichnet, dass** das Verhältnis des Strömungsquerschnittes (A_{I}) des Innenrohrs (18) zum Strömungsquerschnitt (A_{R}) des Ringspaltes (23) im Bereich von A_{I}/A_{R} = 0,4 bis 0,8 liegt.

6. Vorrichtung nach Anspruch 4 oder 5, **dadurch gekennzeichnet, dass** das Verhältnis des Innendurchmessers (D_{I}) des Innenrohrs (18) zum Innendurchmesser (D_{S}) des dieses konzentrisch umgebenden Strahlrohrs (17) im Bereich von D_{I}/D_{S} = 0,55 bis 0,65 ± 0,1 liegt.

7. Vorrichtung nach einem der Ansprüche 1 bis 6, **dadurch gekennzeichnet, dass** die Brennkammermündung (16) im Bereich der Rezirkulationsöffnung (26) oder des Einlasses (20) in das Innenrohr (18) oder ein Stück weit hinter diesem angeordnet ist.

8. Vorrichtung nach einem der Ansprüche 1 bis 7, **gekennzeichnet durch** mindestens eine Sekundärluftzufuhreinrichtung (27) mit mindestens einem Sekundärluftauslass (29), der vorzugsweise in Strömungsrichtung im Bereich vor der Brennkammermündung (16) in den Rezirkulationsdurchlass (26) mündet.

9. Vorrichtung nach Anspruch 8, **dadurch gekennzeichnet, dass** der mindestens eine Sekundärluftauslass (29) als die Brennkammer (12) umschließende Ringspaltöffnung oder als mehrere über den Umfang der Brennkammer (12) verteilt angeordnete, vorzugsweise nicht miteinander verbundene Luftrohröffnungen ausgestaltet ist.

10. Vorrichtung nach Anspruch 8 oder 9, **dadurch gekennzeichnet, dass** der mindestens eine Sekundärluftauslass (29) in den Rezirkulationsdurchlass (26) und/oder den Zentrierstutzen (24) mündet.

11. Vorrichtung nach einem der Ansprüche 1 bis 10, **dadurch gekennzeichnet, dass** die Brennkammermündung (16) einen Austrittsquerschnitt für das aus der Brennkammer (12) austretende Gasgemisch aufweist, der eine auf die Brennerleistung bezogene Querschnittsfläche von 2 bis 10 mm²/kW, vorzugsweise von 3 - 8 mm²/kW aufweist.

12. Vorrichtung nach einem der Ansprüche 1 bis 11, **dadurch gekennzeichnet, dass** die Brennkammermündung (16) eine scharfkantige Düsenöffnung (31) für den Auslass des Gasgemisches aus der Brennkammer (12) bildet.

13. Vorrichtung nach einem der Ansprüche 1 bis 12, **dadurch gekennzeichnet, dass** das Verhältnis des Austrittsquerschnittes der Brennkammermündung (16) zum Querschnitt des mindestens einen Sekundärluftauslasses (29) im Bereich von 1,5 bis 3,0 liegt.

## Claims

1. Burner device for liquid or gaseous fuels for the indirect heating of a furnace chamber, comprising a combustion chamber (12) with a combustion chamber opening (16), with a jet pipe (17) surrounding the combustion chamber (12) at least in the area of the combustion chamber opening (16) and an inner pipe (18) arranged inside it, preferably running coaxially to the combustion chamber opening (16), which has an inner pipe inlet (20) facing the combustion chamber opening (16) and an inner pipe outlet (22) facing a closed end (21) of the jet pipe (17), wherein the outer circumferential surface of the inner pipe (18) forms an annular gap (23) with the inner circumferential surface of the jet pipe (17) for recirculating the gas mixture flowing through the inner pipe (18) from its inlet (20) to the inner pipe outlet (22), wherein a recirculation passage (26) is formed between the inner pipe inlet (20) and the combustion chamber outlet (16), and with a recuperator (32) surrounding the combustion chamber (12) for preheating combustion air by means of exhaust gas discharged from the burner device, wherein the ratio of the flow cross-section (Ar) of the inner pipe (18) to the flow cross-section (AR) of the annular gap (23) is selected such that the static pressure component of the gas mixture flowing through the inner pipe (18) and the annular gap (23) in the region of the inner pipe inlet (20) is smaller than in the annular gap (23) in the region upstream of the recirculation passage (26), and **characterised in that** the recuperator has a centering nozzle (24) facing the annular gap (23) on the exhaust gas inlet side, which forms the inlet (20) for the inner pipe (18) or cooperates with it and on which the recirculation passage (26) is formed.

2. Device according to claim 1, **characterised in that** the flow cross-section (AI) of the inner pipe (18) is at least substantially constant over its length between the inner pipe inlet (20) and the inner pipe outlet (22).

3. Device according to claim 1 or 2, **characterised in that** the ratio of the flow cross-section (AI) of the inner pipe (18) to the flow cross-section (AR) of the annular gap (23) is at least substantially constant.

4. Device according to one of claims 1 to 3, **characterised in that** the jet pipe (17) and the inner pipe (18) each have substantially circular cross-sections and are arranged concentrically to each other.

5. Device according to one of claims 1 to 4, **characterised in that** the ratio of the flow cross-section (AI) of the inner pipe (18) to the flow cross-section (AR) of the annular gap (23) is in the range of AI/AR = 0.4 to 0.8.

6. Device according to claim 4 or 5, **characterised in that** the ratio of the inner diameter (DI) of the inner pipe (18) to the inner diameter (DS) of the jet pipe (17) surrounding it concentrically is in the range of DI/DS = 0.55 to 0.65 ± 0.1.

7. Device according to one of claims 1 to 6, **characterised in that** the combustion chamber opening (16) is arranged in the area of the recirculation opening (26) or the inlet (20) into the inner pipe (18) or a short distance behind it.

8. Device according to one of claims 1 to 7, **characterised by** at least one secondary air supply device (27) with at least one secondary air outlet (29), which preferably opens into the recirculation passage (26) in the area upstream of the combustion chamber opening (16) in the direction of flow.

9. Device according to claim 8, **characterised in that** the at least one secondary air outlet (29) is designed as an annular gap opening surrounding the combustion chamber (12) or as a plurality of air pipe openings distributed around the circumference of the combustion chamber (12), preferably not connected to one another.

10. Device according to claim 8 or 9, **characterised in that** the at least one secondary air outlet (29) opens into the recirculation passage (26) and/or the centring nozzle (24).

11. Device according to one of claims 1 to 10, **characterised in that** the combustion chamber outlet (16) has an outlet cross-section for the gas mixture emerging from the combustion chamber (12) which has a cross-sectional area of 2 to 10 mm2/kW, preferably 3 to 8 mm2/kW, relative to the burner output.

12. Device according to one of claims 1 to 11, **characterised in that** the combustion chamber outlet (16) forms a sharp-edged nozzle opening (31) for the discharge of the gas mixture from the combustion chamber (12).

13. Device according to one of claims 1 to 12, **characterised in that** the ratio of the outlet cross-section of the combustion chamber opening (16) to the cross-section of the at least one secondary air outlet (29) is in the range of 1.5 to 3.0.

## Revendications

1. Dispositif de brûleur pour combustibles liquides ou gazeux pour le chauffage indirect d'une chambre de four, avec une chambre de combustion (12) avec une embouchure de chambre de combustion (16), avec un tube radiant (17) entourant la chambre de combustion (12) au moins dans la zone de l'embouchure de chambre de combustion (16) et un tube intérieur (18) agencé à l'intérieur de celui-ci, s'étendant de préférence coaxialement à l'embouchure de chambre de combustion (16), qui présente une entrée de tube intérieur (20) orientée vers l'embouchure de chambre de combustion (16) et une sortie de tube intérieur (22) dirigée vers une extrémité fermée (21) du tube radiant (17), la surface périphérique extérieure du tube intérieur (18) formant avec la surface périphérique intérieure du tube radiant (17) une fente annulaire (23) pour le retour du mélange gazeux s'écoulant à travers le tube intérieur (18) depuis son entrée (20) vers la sortie de tube intérieur (22), et un passage de recirculation (26) étant réalisé entre l'entrée de tube intérieur (20) et l'embouchure de chambre de combustion (16), et avec un récupérateur (32) entourant la chambre de combustion (12) pour préchauffer l'air de combustion au moyen du gaz d'échappement évacué du dispositif de brûleur, le rapport entre la section transversale d'écoulement (Ar) du tube intérieur (18) et la section transversale d'écoulement (AR) de la fente annulaire (23) étant choisi de telle sorte que la composante de pression statique du mélange gazeux s'écoulant à travers le tube intérieur (18) et l'espace annulaire (23) dans la zone de l'entrée de tube intérieur (20) est inférieure à celle dans l'espace annulaire (23) dans la zone avant le passage de recirculation (26), et **caractérisé en ce que** le récupérateur présente une tubulure de centrage (24) orientée vers l'espace annulaire (23) du côté de l'entrée du gaz d'échappement, qui forme l'entrée (20) pour le tube intérieur (18) ou coopère avec celui-ci et sur laquelle est réalisé le passage de recirculation (26).

2. Dispositif selon la revendication 1, **caractérisé en ce que** la section transversale d'écoulement (A_{I}) du tube intérieur (18) est au moins essentiellement constante sur toute sa longueur entre l'entrée de tube intérieure (20) et la sortie de tube intérieur (22).

3. Dispositif selon la revendication 1 ou 2, **caractérisé en ce que** le rapport entre la section transversale d'écoulement (A_{I}) du tube intérieur (18) et la section transversale d'écoulement (A_{R}) de la fente annulaire (23) est au moins essentiellement constant.

4. Dispositif selon l'une quelconque des revendications 1 à 3, **caractérisé en ce que** le tube rayonnant (17) et le tube intérieur (18) ont chacun une section transversale essentiellement circulaire et sont agencés de manière concentrique l'un par rapport à l'autre.

5. Dispositif selon l'une quelconque des revendications 1 à 4, **caractérisé en ce que** le rapport entre la section transversale d'écoulement (A_{I}) du tube intérieur (18) et la section transversale d'écoulement (A_{R}) de la fente annulaire (23) se situe dans la plage de A_{I}/A_{R} = 0,4 à 0,8.

6. Dispositif selon la revendication 4 ou 5, **caractérisé en ce que** le rapport entre le diamètre intérieur (D_{I}) du tube intérieur (18) et le diamètre intérieur (D_{S}) du tube rayonnant (17) qui l'entoure de manière concentrique se situe dans la plage de D_{I}/D_{S} = 0,55 à 0,65 ± 0,1.

7. Dispositif selon l'une quelconque des revendications 1 à 6, **caractérisé en ce que** l'embouchure de chambre de combustion (16) est agencée dans la zone de l'ouverture de recirculation (26) ou de l'entrée (20) dans le tube intérieur (18) ou à une certaine distance derrière celle-ci.

8. Dispositif selon l'une quelconque des revendications 1 à 7, **caractérisé par** au moins un appareil d'amenée d'air secondaire (27) avec au moins une sortie d'air secondaire (29) qui débouche de préférence dans la direction d'écoulement dans la zone avant l'embouchure de chambre de combustion (16) dans le passage de recirculation (26).

9. Dispositif selon la revendication 8, **caractérisé en ce que** l'au moins une sortie d'air secondaire (29) est conçue comme une ouverture à fente annulaire entourant la chambre de combustion (12) ou comme plusieurs ouvertures de tube d'air agencées réparties sur la périphérie de la chambre de combustion (12), de préférence non reliées entre elles.

10. Dispositif selon la revendication 8 ou 9, **caractérisé en ce que** l'au moins une sortie d'air secondaire (29) débouche dans le passage de recirculation (26) et/ou dans la tubulure de centrage (24).

11. Dispositif selon l'une quelconque des revendications 1 à 10, **caractérisé en ce que** l'embouchure de chambre de combustion (16) présente une section transversale de sortie pour le mélange gazeux sortant de la chambre de combustion (12) qui présente une surface de section transversale rapportée à la puissance du brûleur de 2 à 10 mm²/kW, de préférence de 3 à 8 mm²/kW.

12. Dispositif selon l'une quelconque des revendications 1 à 11, **caractérisé en ce que** l'embouchure de chambre de combustion (16) forme une ouverture de buse à arêtes vives (31) pour la sortie du mélange gazeux hors de la chambre de combustion (12).

13. Dispositif selon l'une quelconque des revendications 1 à 12, **caractérisé en ce que** le rapport entre la section transversale de sortie de l'embouchure de chambre de combustion (16) et la section transversale de l'au moins une sortie d'air secondaire (29) se situe dans la plage de 1,5 à 3,0.
